# EUROPEAN PATENT APPLICATION

(11) **EP 3 182 539 A1**
(43) Date of publication of application: **21.06.2017**
(21) Application number: 15201320.7
(22) Date of filing: 18.12.2015
(51) Int. Cl.: H02B 13/045, H01H 33/662, H02B 13/035, H01H 33/666

(54) **SUBSEA HOUSING FOR MEDIUM VOLTAGE VAKUUM CIRCUIT BREAKER IN HIGH PRESSURE ENVIRONMENT**

(71) Applicant: ABB Technology AG, 8050 Zürich (CH)
(72) Inventor: Gentsch, Dietmar, 40882 Ratingen (DE); Bellut, Markus, 40219 Düsseldorf (DE); Masmeier, Philipp, 40472 Düsseldorf (DE)
(74) Representative: Schmidt, Karl Michael

(57) **Abstract**

Subsea housing (1) for medium voltage vacuum circuit breaker (6) in high pressure environment, wherein the vacuum circuitbreaker (6) is assembled on a separate platform (7) which is to be inserted into a ceramic cylidrical high pressure withstanding housing (1,2), this in order to enhance the assembling and the pressure tightness in high pressure environment, the invention is, that the subassembly is mounted on a separate inserted platform, which is insertable and fixable inside the tubelike outer housing.

figure 1

## Description

The present invention relates to a housing for medium voltage subassemblies in high pressure environment, which are installed in high pressure tight enclosure or housing, according to the preamble of claim 1.

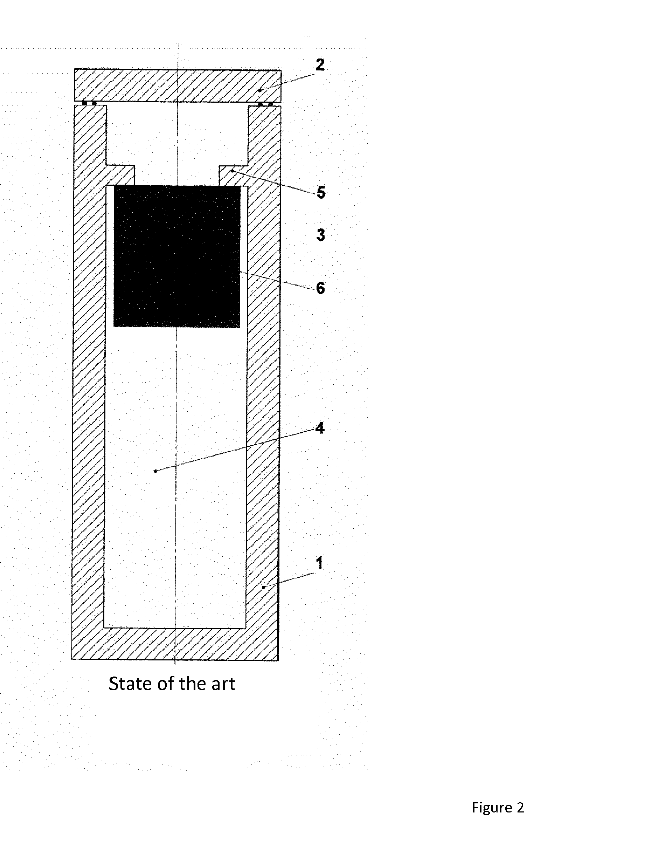

State of the art for positioning and fastening of subassemblies in a pressure tight housing 1 is shown in Figure 2. A sealing is located in a fluid under high pressure, e.g. in a subsea application. The outer housing has got to fulfil requirements for keeping the inside area at atmospheric pressure. At the same time, it provides mounting and fixing points to hold a subassembly, that needs to be located under atmospheric pressure. The fixing means are an integral collar of the inner wall of the housing.

This housing can for example contain a vacuum interrupter with a drive. These parts must not be located directly in a high pressurized fluid, e.g. 300bar oil on a subsea-level, and have to be pressure tight against the environment, inside the outer housing at 1 Bar.

In this case, the vacuum interrupter with its drive is the aforesaid subassembly.

While the subassembly needs a certain accuracy of the position of the mounting points, it may be difficult to provide this directly in a relatively coarse part like a large housing. On the other hand, creating such a housing with the needed fineness results in a high effort.

For example, when using a steel pipe as a standard part, it is not easy to handle, when several features, like holes, threads or cut-outs are necessary. It is also difficult to machine the complete part from raw materials.

So it is the object of the invention, to overcome these problems by easy mountable feature.

The invention is, that the subassembly is mounted on a separate inserted platform, which is insertable and fixable inside the tubelike outer housing.

In an advantageous embodiment, the inserted platform is provided with a collar, which diameter is bigger than its inner diameter of the outer housing, and that the tubelike outer housing is provided at its openable end with a stepped recess with an diameter extension, in such, that after opening the tubelike outer housing, the insertable platform with the mounted subassembly can be inserted until the aforesaid collar of the platform is positioned in the stepped recess.

By that, the recess of the housing is the mechanical bearing in that direction, that the higher pressure from outside supports the pressure tight sealing effect proportional to the amount of pressure difference from the higher outer pressure, to the lower inner pressure. The inner pressure is preferably at about 1 Bar and remains at that level under external high pressure environment.

In addition to that, the collar and the recess are dimensioned in such, that after closing the outer housing and fixing by an end cap, the end cap positions the platform AND seals the outer housing high pressure tightly in one step and function.

An embodiment of the invention is shown in the drawing:
Figure 1: cross section through the long axis of a housing
Figure 2: State of the art

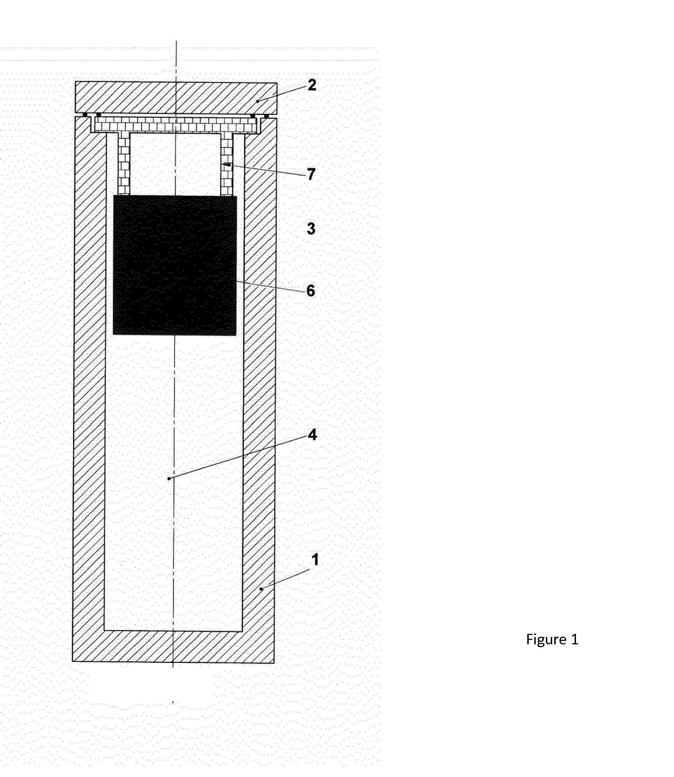

Figure 1 shows, what is proposed in this invention. The subassembly 6 is mounted to a separate inserted platform 7, that is smaller and therefore easier to be manufactured with finer tolerances.

This platform is integrated in the coarse manufactured housing 1, that consists of standard parts without special requirements, regarding the subassembly. In this case, the effort on the housing 1 is much lower.

This platform 7 can be a platform or a holding device that form an easy-to-use unit together with the subassembly 6, e.g. a breaker-pole. This can be assembled before it is introduced into the housing 1 and does not need to be treated, when it is already inside as in the state of the art.

The platform 7 is directly attached to the sealing 2 and fixed there. This is the only area, where the housing has to be treated. In this combination the housing 1 and the inserted platform 7 can be considered and protected as an integrated canister.

Importantly, the inserted platform is provided with a collar, which diameter is bigger than its inner diameter of the outer housing, and that the tubelike outer housing is provided at its openable end with a stepped recess with an diameter extension, in such, that after opening the tubelike outer housing, the insertable platform with the mounted subassembly can be inserted until the aforesaid collar of the platform is positioned in the stepped recess.

By that, the collar is positioned centrally into the recess, which is an integral step at one side of the tubelike housing, so that it additionally is loaded by the the external high environment pressure in such, that the tight sealing will be effected by that. Further additionally the subassembly can be easily mounted on the aforesaid platform.

Nevertheless, the platform can be covered by a further attached lid. But anyway, the platform itself centers the mounted subassembly in the manufactural step of closing the housing.

So in result, the separate inserted platform, which is insertable and fixable inside the tubelike outer housing, is easy to install, but also higly advantageous for keeping the sensible pressuretight housing mechanically untouched.

As further main parts in the aforesaid housing, can be placed a vacuum interrupter and a drive.

This is completely different to the state of the art in Figure 2, wherein a sealing 2 is located in a fluid 3 under high pressure, and the outer housing has got to fulfil requirements for keeping the inside area 4 at atmospheric pressure.

As further main parts in the aforesaid housing, not displayed in Figure 1, can be placed a vacuum interrupter and a drive.

## Claims

1. Housing for medium voltage subassemblies in high pressure environment, which are installed in high pressure tight enclosure or housing,
**characterized in**
**that** the subassembly (6) is mounted on a separate inserted platform (7), which is insertable and fixable inside the tubelike outer housing (1).

2. Housing according to claim 1,
**characterized in**
**that** the inserted platform is provided with a collar, which diameter is bigger than its inner diameter of the outer housing, and that the tubelike outer housing is provided at its openable end with a stepped recess with an diameter extension, in such, that after opening the tubelike outer housing, the insertable platform with the mounted subassembly can be inserted until the aforesaid collar of the platform is positioned in the stepped recess.

3. Housing according to claim 2,
**characterized in**
**that** the collar and the recess are dimensioned in such, that after closing the outer housing and fixing by an end cap, the end cap positions the platform and seals the outer housing high pressure tightly in one step and function.
